# EUROPEAN PATENT SPECIFICATION

(11) **EP 1 830 625 B1**
(45) Date of publication and mention of the grant of the patent: **09.09.2009**
(21) Application number: 05812647.5
(22) Date of filing: 06.12.2005
(51) Int. Cl.: A01G 25/09

(54) **LIQUID APPLICATION SYSTEM FOR CENTER PIVOT IRRIGATION SYSTEM**
FLÜSSIGKEITSZUFUHRSYSTEM FÜR BERIESELUNGSSYSTEM MIT ZENTRALEM DREHPUNKT
SYSTEME D'APPLICATION DE LIQUIDE POUR SYSTEMES D'IRRIGATION PAR PIVOT CENTRAL

(30) Priority: 06.12.2004 PT 10321704
(43) Date of publication of application: 12.09.2007
(73) Proprietor: Falcão Estrada, Ernesto José de Sousa, 7400-224 Ponte de Sôr (PT)
(72) Inventor: Falcão Estrada, Ernesto José de Sousa, 7400-224 Ponte de Sôr (PT)
(74) Representative: Pereira da Cruz, Jorge Afonso
(86) International application number: PCT/PT2005/000021
(87) International publication number: WO 2006/062426

(56) References cited:
- FR-A- 2 659 829
- US-A- 3 669 353
- US-A- 5 246 164
- US-A- 5 779 163

## Description

### 1. BACKGROUND OF THE INVENTION

The present invention refers to a Low flow liquid application system for center pivot irrigation systems, for applications requiring low volumes of water, as chemical treatments.

The invention consists of adapting to the pivot independent pipes with micro-sprinklers having different distances between them, according to calculation to make case the case to obtain the correct distribution and application uniformity.

The micro-sprinklers are installed with growing spacing, from the pivot's end to its center, and may have constant or variable values of water flow.

When this space becomes theoretical bigger than the maximum allowed, attending to the need to keep a good coverage of each micro-sprinkler's debit, it will be installed a temporization system, reducing the effective flow and allowing the reduction of that distances. US 57 79 163 discloses a low flow liquid application system as in the preamble of claim 1

### 2. STATE-OF-THE-ART

Actually this kind of applications is made with aerial means, with tractor-mounted micro-sprinklers, directly trough the pivot's irrigation water or by means of other pivot-mounted systems.

The applications by aerial means are being restricted due to its costs and associated ecological risks.

The tractor-mounted micro-sprinklers applications are very limited by the soil conditions, becoming many times impossible, and produce a partial destruction of the installed crops.

The direct applications through the pivot's irrigation water requires the use of very high amounts of water, that are not desired in many seasons and incompatible with many products because of the very high resulting dissolution degree for them. Meanwhile many of these products are chemically aggressive for the pivot's structure, reducing its useful life.

Other pivot-mounted systems are very expensive and not very trustful, in terms of maintenance or efficiency.

They are usually based in micro-sprinklers installed at fixed distances, looking to achieving the distribution uniformity by an increase of the flow provided for each spray, as they are even further from the center of the system.

This flow control is very complex especially in low flow systems; it is conditioned by the difficulty to find proper equipment with the required rigor, and has not yet been properly solved.

Among the systems of the previous technique we'll next refer some documents however not based on the growing spacing between sprays, from the pivot's end to its center. Among them, we refer patent FR2659829, US5246164, and DE10154470

Patent FR2659829 refers to a rotating circular micro-sprinkler system for watering crops and applying pesticides. The system consists in a frame in sections on wheeled supports, rotating about a central fixed tower. The frame carries a main feed pipe, which is connected to the spray bar by a series of vertical branches one for each section, incorporating a pressure regulator and electrically operated-valve. Each valve is linked in parallel with the drive motor of the corresponding section's wheeled support so that the valve closes and shuts off the feed to the spray bar every time the micro-sprinkler stops. A horizontal cable, to which clips connect it at intervals, supports the spray bar and it has tensioners at its ends to maintain its horizontal position.

Patent US5246164 refers to an irrigation system having a number of micro-sprinklers in a fixed array each other, which are pivotally rotatable about a central tower or linearly movable along the length of a field, on a wheel line system or in a fixed solid lattice grid of a micro-sprinkler pipe. A solenoid-operated valve from a control module that is connected to a data acquisition and control unit, which activates or deactivates each individual micro-sprinkler head, independently controls each micro-sprinkler. A microprocessor receives data from micro-sprinkler line position sensors, ground speed sensors and micro-sprinkler line pressure sensors, and is programmed to determine the current position of each individual micro-sprinkler. The microprocessor generates maps from the field data or digital images, and the map positions, corresponding to current micro-sprinkler positions, are tested to determine water or chemical application requirements. The test data is then input by the microprocessor to the data acquisition and control system, which in turn sends signals to the micro-sprinkler control modules.

Patent DE10154470 refers to an irrigation device, especially for irrigating agricultural areas, that comprises a chassis supporting an extension arm protruding an equal distance over both sides of the chassis and provided at each end with a micro-sprinkler coupled to a water supply line. Each micro-sprinkler has al least two discharge nozzles arranged the same distance from the axis of rotation of the micro-sprinkler and the same angle. The discharge nozzles are directed in a tangential position to the axis of rotation. The position of each discharge nozzle is variable. Each discharge nozzle is fixed via a flange on a micro-sprinkler head rotating about the axis of rotation. This irrigation device is used for the irrigation of agricultural areas. The irrigation device has a relatively simple construction guaranteeing ecological and economical irrigation.

As we can see none of the referred documents anticipates the object of this invention. In fact none of that documents refers a growing spacing between the sprays, which will allow the use of a constant flow at any spray.

### 3. DESCRIPTION OF DRAWINGS

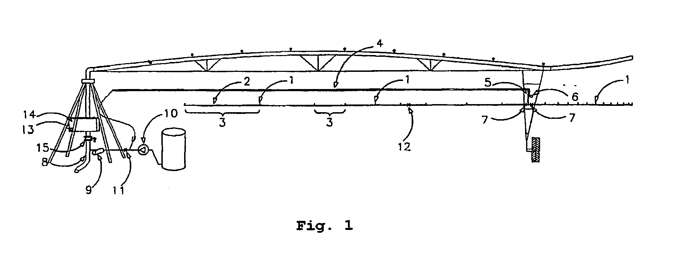

The following description is based on the annex figures that, without any limitative feature, represent
Drawing n° 1: schematically, a center pivot and the system's installation way for the Low flow liquid application system.

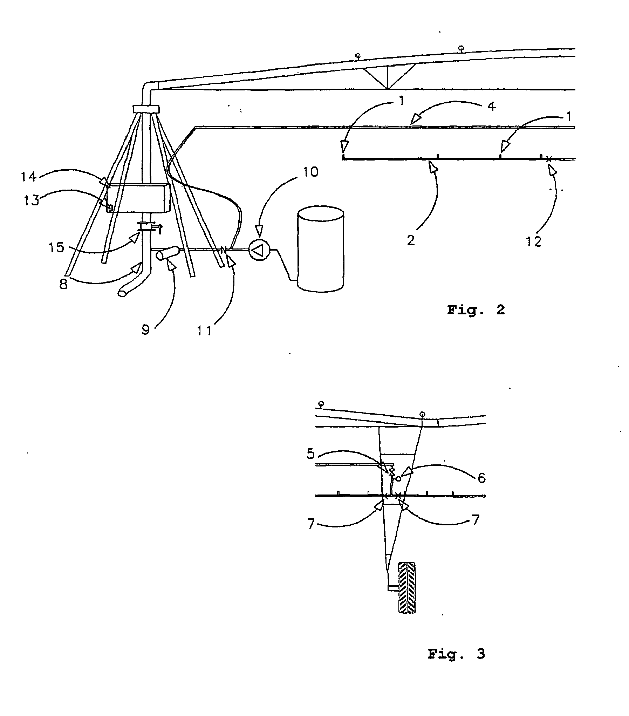

Drawing n° 2: detail of the linking between the system's pipes and the pivot's vertical pipe.
Drawing n° 3: detail of the positioning of the pressure regulation systems, the pressure indicator and the manual and automatic valves.

### 4. DESCRIPTION OF THE INVENTION

The base of the invention as defined in claim 1 is the use of low flow and cost sprays (1) installed on a distribution pipe (2) suspended to the pivot at variable distances from each other (3), to compute for each pivot.

These sprays (1) can be of uniform flow, helping his choice and his installation. If required by the ground topography, they may include flow compensation system, so that the flow is constant regardless the inlet pressures.

The distribution pipe (2) is fed in various points from the main feeding pipe (4), disposing at that points pressure regulation systems (5), pressure indicators (6) and manual or automatic valves (7) allowing to intersect the distribution pipe when the application in some parts is not desired.

The feeding pipe (4) is connected to the pivot's vertical pipe (8), from where receives the water, after proper manual or automatic filtering (9).

The inlet of chemical products is made after this filter by means of a dosing pump (10), being required the installation of an anti return valve (11) avoiding the chemical flow upwards.

At the distribution pipe's sections where the spray's working must be time controlled, acts a solenoid valve (12) controlled by a timer relays (13) installed for instance at the pivot's control panel (14).

So the system uses the pivot's electrical and water supplies, as most of its existing security systems, being installed a valve (15) avoiding water entrance to the pivot.

The pivot's pumping system can be used to feed this system if it is installed a pressure control system as a reducing pressure valve or a flow return by-pass, or other pump control system as a motor speed controller.

It may also be installed a specific pump group for this low flow system.

The distribution pipe can be installed at a fixed or variable high to the ground, adapting to the existing crops, and the chemical products application can be restricted separating same of its sections, allowing cost and ecological risk reductions.

## Claims

1. Low flow liquid application system for center pivot irrigation systems allowing the use of very low flow values, based on the installation of two pivot's suspended pipes (2,4), one (4) for liquid feeding and the other (2) for its distribution, with filtering and pressure control systems, being its water feeding the pivot's feeding pipe or other, suspended at variable hights from the ground for adapting to the crop's conditions, being the products application optionally restricted, manual or automatically, to chosen sections of the distribution pipe, **characterized** for using variable spacing between the liquid distribution sprays (1) growing from the end of the pivot to its center, to calculate case by case, what allows that each spray have equal dimensions and flow values, helping the system's dimensioning, installation and maintenance, being the spray's locations along the system defined by the rule that to each one corresponds an constant area of the field.

2. Low flow liquid application system for center pivot irrigation systems according with the first claim **characterized** for, when the theoretical spacing between sprays is excessive from de point of view of the required distribution uniformity, the use of a spray's temporization system allowing to reduce the theoretical spacing.

3. Low flow liquid application system for center pivot irrigation systems according with the previous claims **characterized** for the use of flow regulated sprays, with the same flow regardless the inlet pressure, whenever the field topography conditions requires.

## Patentansprüche

1. Low-Flow-Systeme für die Anwendung von Flüssigkeiten bei Kreisbewegungsmaschinen erlauben sehr reduzierte Werte des Wasserflusses, basierend auf der Installation von zwei Hängevorrichtungen ( Rohre) am Pivot, eine zur Steuerung, die andere zur Verteilung. Eingebaut ist ein Display für die Filterung und Regulierung der Kontrolle des Wasserdrucks. Die Energiequelle ist durch das Wasser, welches die Zuleitungsrohre oder andere Quellen transportieren, gewährleistet. Die Leitungen sind in angepassten Höhen montiert, abhängig von den jeweiligen Pflanzenkulturen. Der Wasser-und Produktverbrauch ist optional restringiert. Dies geschieht entweder manuell oder automatisch, Arme der Verteilungsleitung werden ausgewählt, sie charakterisieren sich dadurch, dass variable Abstände zwischen den Verteilungsmikro-Sprinklern benutzt werden,die Entfernungen zwischen dem Ende des Pivots und seinem Zentrum wächst zunehmend, von Fall zu Fall berechnet, so dass die Verteilungsweite und der Wasserfluss jedes Sprinklers gleich ist. Damit wird seine Dimensionierung und die Anwendung von Produkten sowie die Wartung erheblich vereinfacht,basierend darauf, dass ihre Positionierung entlang der Verteilungsleitung durch das Prinzip, dass jeder Mikro-Sprinkler eine konstante Fläche bewässert, bestimmt ist.

2. Das System zur Anwendung von Flüssigkeiten in Bewässerungsanlagen im Einvernehmen mit der 1. Forderung wird charakterisiert durch folgendes:
Wenn der theoretische Abstand zwischen den Mikro-Sprinklern im Hinblick auf die Uniformität der Verteilung zu exzessiv ist, wird ein System zur Temporisierung der Mikro-Sprinkler eingebaut, dass den theoretischen Abstand reduziert.

3. Das Low-Flow-System für flüssige Anwendung in Center Pivot-Bewässerung-Systemen zeichnet sich nach den vorangegangen Angaben ( Forderungen ) dadurch aus, dass, immer dann, wenn die topographische Lage es erfordert, ein System der Autokompensation des Wasserflusses eingebaut wird. Dieses basiert darauf, dass dieselbe Durchflussmenge durch unterschiedlichen Druck erzeugt wird.

## Revendications

1. Système de faible débit liquide pour centre pivot d'irrigation permettant l'utilisation de flux avec très faibles valeurs, fondée sur l'installation de deux conduites en suspension sur le pivot, l'un pour l'alimentation liquide et l'autre pour sa distribution, avec un filtrage et des systèmes de contrôle de la pression, l'eau venant du pivot d'irrigation ou d'autre origine, suspendus à des niveaux variables du sol pour l'adaptation aux conditions de la culture, étant l'application de l'eau et de produits éventuellement limitée, manuellement ou automatiquement, aux sections choisies de la canalisation de distribution, **caractérisée par** l'utilisation d'un espacement variable entre les pulvérisateurs, de plus en plus de la fin de son centre, à calculer au cas par cas, ce qui permet pour chaque pulvérisateur la même dimension et valeur de flux, en aidant le dimensionnement du système, son installation et maintenance, leur emplacement le long de la barre de distribution défini par le principe que a chaque pulvérisateur doit être affecté le même valeur de surface du sol

2. Système de faible débit liquide pour centre pivot d'irrigation en fonction de la première revendication **caractérisé** pour, lorsque l'espacement entre les pulvérisations théorique est excessif du point de vue de l'uniformité de la distribution, l'utilisation d'un système de temporisation pour les pulvérisateurs permettant de réduire l'espacement théorique.

3. Système de faible débit liquide pour centre pivot d'irrigation en fonction des revendications précédentes **caractérisée par** l'utilisation d'un système d'autorégulation par pression compensée avec stabilisateur de flux aux pulvérisateurs qui auront le même débit quelle que soit la pression d'entrée, lorsque les conditions de la topographie du terrain en exigent.
